# EUROPÄISCHE PATENTSCHRIFT

(11) **EP 2 840 374 B1**
(45) Veröffentlichungstag und Bekanntmachung des Hinweises auf die Patenterteilung: **12.09.2018**
(21) Anmeldenummer: 14158893.9
(22) Anmeldetag: 11.03.2014
(51) Int. Cl.: G01L 19/06

(54) **Drosselblende für eine Sensoranordnung**
Orifice for a sensor arrangement
Obturateur de mesure pour un système de capteurs

(30) Priorität: 06.05.2013 DE 102013208276
(43) Veröffentlichungstag der Anmeldung: 25.02.2015
(73) Patentinhaber: ROBERT BOSCH GMBH, 70442 Stuttgart (DE)
(72) Erfinder: Zweigle, Peter, 71254 Ditzingen (DE); Herderich, Hans-Juergen, 71394 Kernen (DE); Kircher, Michael, 71711 Steinheim An Der Murr (DE); Prus, Bogdan, 70806 Kornwestheim (DE)

(56) Entgegenhaltungen:
- DE-A1-102004 025 339
- DE-C- 830 142
- US-A1- 2011 198 171

## Beschreibung

Die vorliegende Erfindung betrifft eine Sensoranordnung mit einer Drosselblende zur Vermeidung von Beschädigungen von Drucksensoren durch Druckspitzen.

### Stand der Technik

Hydraulikleitungssysteme, insbesondere für Automobile, weisen an verschiedenen Positionen im Hydraulikleitungssystem Sensoren, insbesondere Drucksensoren auf, die eingerichtet sind, einen lokal oder global im Hydrauliksystem herrschenden Druck zu ermitteln, um diesen ermittelten Druckwert an ein Steuergerät weiterzugeben. Das Steuergerät kann, basierend auf dem ermittelten Druckwert, Aktionen im Fahrzeug auslösen. Gleichfalls kann ein ermittelter Druckwert verwendet werden, um eine korrekte Funktion oder eine mögliche Fehlfunktion eines Hydrauliksystems in einem Fahrzeug zu detektieren und im Weiteren eine mögliche Fehlfunktion von mit dem Hydrauliksystem verbundenen Fahrzeugkomponenten ermitteln.

Bei Drucksensoren in hydraulischen Systemen, zum Beispiel zur Steuerung von Kfz-Automatikgetrieben, können kurzzeitige, sehr hohe Druckspitzen auftreten, welche Druckspitzen Messelemente, zum Beispiel Drucksensoren des Hydraulikleitungssystems beschädigen können. Die Beschädigungen können reduziert oder vermieden werden, indem beispielsweise zwischen einem Sensorelement und dem Hydraulikleitungssystem ein Element vorgesehen ist, welches die Weiterleitung eines solchen Druckpulses dämpft und somit Druckspitzen reduzieren mag.

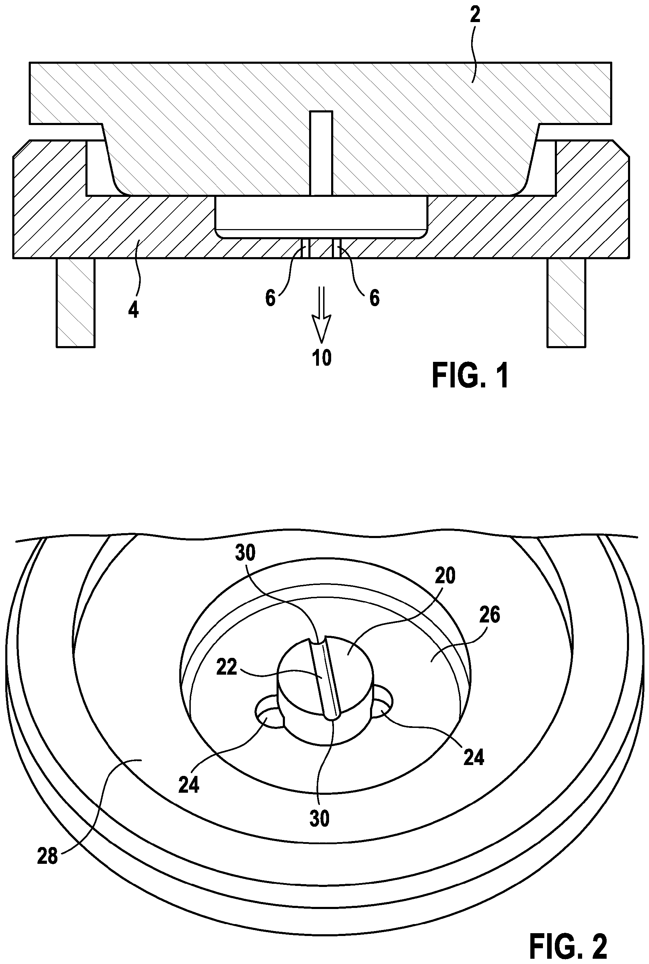

Figur 1 zeigt exemplarisch eine derartige Ausgestaltung, bei der ein schematisch gezeigter Drucksensor mit Messöffnung 2 unter Verwendung einer Vorsatzplatte 4 an ein Hydraulikleitungssystem 10 angeschlossen ist. Zwischen dem Hydraulikleitungssystem 10 und dem Drucksensor 2 befindet sich in der Vorsatzplatte eine Blende mit kleinen Öffnungen, beispielsweise im Bereich von 0,2-0,3 mm, welche einerseits langsame Druckschwankungen im Hydraulikleitungssystem passieren lassen können, so dass der zugehörige Hydraulikleitungsdruck vom Drucksensor 2 detektierbar ist, während jedoch Druckspitzen aufgrund der Ausgestaltung und insbesondere Größe der Öffnungen 6 der Blende nur verzögert bzw. gedämpft weitergegeben werden.

Eine solche Vorsatzplatte 4 ist jedoch schwierig herzustellen, da das Einbringen von derart kleinen Blendenöffnungen 6 fertigungstechnisch schwierig ist. Insbesondere werden Blendenöffnungen gemäß Figur 1 meist in einem zweiten Herstellungsschritt in die Vorsatzplatte 4 eingebracht, beispielsweise durch Bohren und dergleichen. Die für die Funktion nötige Lochgröße der Blendenöffnungen 6 liegt dabei bei wenigen Zehntelmillimetern. Bei spanender Herstellung entstehen durch unvermeidlichen und insbesondere aufgrund der Lochgröße häufigen Bohrerbruchs hohe Kosten. Bei Anfertigung der Vorsatzplatte zum Beispiel mit einem Spritzwerkzeug ist dies in diesem Bereich sehr verschleiß- und bruchanfällig.

Somit ist die Herstellung einer herkömmlichen Vorsatzplatte aufwendig und kostenintensiv.

Aus der DE 10 2004 025 339 A1 ist ein Drucksensor bekannt, bei dem ein als Stanzbiegeteil ausgebildetes Bauteil über federnde Stege an einer Nut eines Gehäuses befestigt ist, so dass das Bauteil als Drosselscheibe wirkt.

Aus der US 2011/0198171 A1 ist eine Druckminderungsvorrichtung für ein gasförmiges Medium bekannt, bei der Druckspitzen über Reibung des Mediums an Wänden eines in ein Dämpfteil eingebrachten spiralförmigen verlaufenden Druckkanals gedämpft werden.

Aus der DE 830 142 ist ein Stoßdämpfer für Membranen bekannt, welcher einen Drosselkörper mit wenigsten zwei Durchgangskanälen aufweist, so dass ein durch den Drosselkörper strömendes Medium in mehrere Strahlen zerlegt wird.

### Offenbarung der Erfindung

Ein Aspekt der vorliegenden Erfindung mag darin gesehen werden, eine vereinfachte Blendenfunktion für einen Drucksensor bereitzustellen, insbesondere mit reduziertem Herstellungsaufwand.

Demgemäß wird eine Sensoranordnung mit einer Drosselblende gemäß dem unabhängigen Anspruch angezeigt. Bevorzugte Ausgestaltungen ergeben sich aus den abhängigen Ansprüchen.

Die erfindungsgemäße Drosselblende ermöglicht dabei eine günstigere Herstellung durch die Verwendung einfacherer Geometrien, wodurch robustere Werkzeuge zur Herstellung verwendet werden können.

Erfindungsgemäß werden der Kanal bzw. die Blendenöffnungen, welche herkömmlich als ein vollständig geschlossener Kanal mit Einlass- und Auslassöffnungen ausgebildet sind, dahingehend abgeändert, dass sich diese Blendenöffnungen bzw. Zulauföffnungen des Hydraulikmittels zum Drucksensor eben nicht mehr als geschlossener Kanal bzw. geschlossene Druckübertragungsleitung darstellt, sondern vielmehr als eine nicht geschlossene Druckübertragungsleitung, beispielsweise als ein an angeschnittener Kanal realisiert wird, welcher mit einem weiteren Element, beispielsweise dem Gehäuse des Drucksensors selbst erst derart verschlossen wird, so dass sich die (geschlossene) Druckübertragungsleitung zwischen Hydrauliksystem und Drucksensor ausbildet.

So wird beispielsweise von einer Seite der Drosselblende eine nicht geschlossene Zulauföffnung eingebracht, beispielsweise ein im Wesentlichen halbkreisförmiger Kanal bzw. Nut, wobei die Funktion der Druckübertragungsleitung dahingehend erzielt wird, dass eine geeignet ausgestaltete Oberfläche eines weiteren Elementes auf die im Wesentlichen plane Oberfläche der Drosselblende mit ihrer Nut bzw. Vertiefung zu liegen kommt, so dass durch das weitere Element erst eine geschlossene Druckübertragungsleitung (beispielsweise mit einem Halbkreisquerschnitt) ausgebildet wird. Geschlossen stellt in diesem Zusammenhang auf den Verlauf der Druckübertragungsleitung in ihrer Längserstreckung zur Leitung eines Hydraulikmediums ab, wobei selbstredend Einlass- bzw. Auslassöffnung(en) für eine bestimmungsgemäße Funktion vorgesehen sein müssen.

Die nicht-geschlossene Druckübertragungsleitung weist somit die Form eines in seiner Längserstreckungsrichtung geöffneten, z.B. halbierten, Kanals auf. Weiterhin weist die nicht-geschlossene Druckübertragungsleitung Einlass und Auslassöffnung(en) auf, welche jedoch erst durch die Kontaktierung bzw. den Abschluss der nicht-geschlossene Druckübertragungsleitung mit dem weiteren Element eine Öffnung im herkömmlichen Sinn ausbilden, wie z.B. die Öffnung eines Rohres oder Kanals. Auch kann eine Öffnung der nicht-geschlossene Druckübertragungsleitung im Wesentlichen dadurch realisiert werden, dass das weitere Element an der gewünschten bzw. geforderten Stelle der Öffnung selbst eine Öffnung aufweist, so dass an dieser Stelle ein Hydraulikmedium in die/aus der mit dem weiteren Element abgeschlossenen, jedoch selbst bzw. für sich allein genommenen nicht-geschlossenen Druckübertragungsleitung ein/austreten kann.

In einer Drosselblende für einen Drucksensor bzw. in einer, z.B. der oberen Fläche einer Vorsatzplatte für den Drucksensor wird eine Nut eingebracht. Der wirksame Blendenquerschnitt wird dabei erzeugt, indem die Vorsatzplatte an der Stirnfläche eines Drucksensors anliegt und somit durch den Drucksensor die nicht geschlossene Druckübertragungsleitung bzw. Nut in eine geschlossene Druckübertragungsleitung umgebildet wird. Der Zutritt des Hydraulikmediums in ein Reservoir der Vorsatzplatte kann durch Zulauföffnungen in die Vorsatzplatte bereitgestellt werden, deren Anschlussquerschnitt vergleichsweise groß sein kann, da diese nun nicht mehr eine Druckspitzenminderungsfunktionalität aufweisen müssen. Diese Öffnungen durch die Vorsatzplatte in das Reservoir können somit wesentlich gröber ausgelegt und einfacher herstellbar sein.

Ausführungsformen der Erfindung sind in den nachfolgenden Figuren dargestellt und in der nachfolgenden Beschreibung näher erläutert.

Es zeigen
- Figur 1: eine exemplarische Ausgestaltung eines Drucksensors mit Vorsatzplatte;
- Figur 2: eine exemplarische Ausgestaltung einer Drosselblende sowie Vorsatzplatte gemäß der vorliegenden Erfindung;
- Figur 3: einen exemplarischen Querschnitt durch eine Drosselblende/Vorsatzplatte gemäß der vorliegenden Erfindung; und
- Figuren 4a,b: exemplarische Ausgestaltungen der Drosselblende und der Druckübertragungsleitung gemäß der vorliegenden Erfindung.

Weiter Bezug nehmend auf Figur 2 wird eine exemplarische Ausgestaltung einer Drosselblende sowie Vorsatzplatte gemäß der vorliegenden Erfindung dargestellt.

Figur 2 zeigt einen schematischen Aufbau einer erfindungsgemäßen Vorsatzplatte 28 mit einer Drosselblende 20. Ein Reservoir 26 ist vorgesehen, in welchem sich über Zulauföffnungen 24 Hydraulikmittel ansammeln kann. Der eigentliche Zulauf bzw. die eigentliche Druckübertragungsleitung 22 zu einem auf der Vorsatzplatte 28 angeordneten Sensorelement 2 erfolgt über Druckübertragungsleitung 22, exemplarisch ausgebildet als eine halbkreisförmige Nut. Wird nun auf die Oberfläche der Vorsatzplatte 28 sowie Drosselblende 20 ein Sensorelement 2 mit seiner Stirnseite derart aufgebracht, so dass der Zulauf im Sensorelement 2 im mittleren Bereich der Drosselblende in der Druckübertragungsleitung 22 liegt, so erfolgt ein Zu- und Abstrom von Hydraulikmittel ausschließlich über die vergleichsweise kleinen Öffnungen 30, die seitlich der Drosselblende in das Reservoir 26 gerichtet sind.

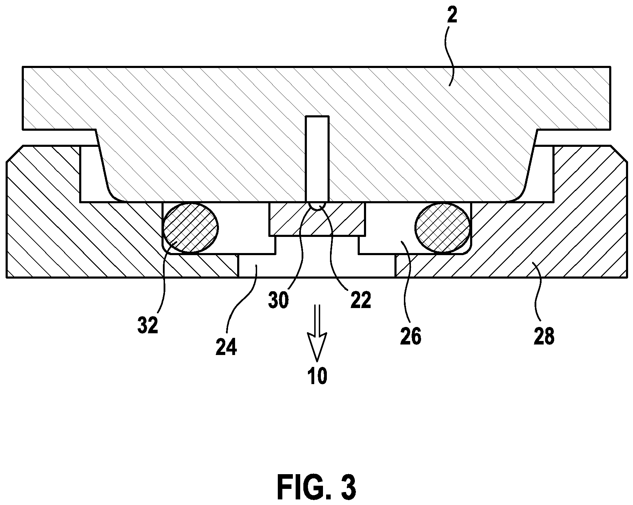

Figur 3 zeigt dabei die Anordnung der Vorsatzplatte 28 sowie der Drosselblende 20 mit einem Sensorelement 2. Sensorelement 2 ist somit derart auf die Vorsatzplatte 28 und deren Drosselblende 20 aufgebracht, so dass sich mit der unteren Oberfläche des Sensorelementes 2 ein Kanal 22 in die Zeichenebene hinein ausbildet, welcher die vergleichsweise kleine Öffnung 30 realisiert, die wiederum geeignet eingerichtet ist, Druckschwankungen bzw. Druckspitzen im Hydraulikleitungssystem nur verzögert bzw. gedämpft an das Sensorelement 20 weiterzugeben. In Figur 3 gut zu erkennen ist die vergleichsweise große Zulauföffnung 24, die somit wesentlich einfacher herstellbar ist und auch robuster ausgestaltet sein kann. Dadurch, dass die Druckübertragungsleitung 22 durch eine robuste und vergleichsweise einfach herzustellende Oberflächenvariation eines Formwerkzeuges herstellbar ist, ist auch das Formwerkzeug robuster und weist eine höhere Lebensdauer auf.

Das Gehäuse des Sensorelementes 2 und der Vorsatzplatte 28 wird unter Verwendung eines Dichtelementes 32, beispielsweise ein O-Ring, abgedichtet. Die Befestigung von Sensorelement 2 und Vorsatzplatte 28 zueinander ist in Figur 3 nicht näher dargestellt.

An der Unterseite ist wiederum Hydrauliksystem 10 angeschlossen. Für die Funktion mag dabei entscheidend sein, dass die Vorsatzplatte gut an der Drucksensorstirnfläche anliegt. Dies mag sichergestellt werden durch Aufbringen einer Axialkraft auf den Drucksensor, zum Beispiel durch eine Andruckfeder, die die Bauteile auf den hydraulischen Anschluss andrückt. Alternativ kann eine kraft-, form- oder stoffschlüssige Verbindung der Vorsatzplatte mit dem Drucksensor realisiert sein.

Zusätzlich wird das Anliegen unterstützt, da der hydraulische Anschlussquerschnitt größer gewählt ist als der medienbeaufschlagte Stirnquerschnitt am Drucksensor. Dadurch entsteht ein Kraftüberschuss, der die Vorsatzplatte an das Sensorelement andrückt. Die Abdichtung zwischen Drucksensor, Vorsatzplatte und hydraulischem Anschluss kann auch durch O-Ringe und andere Elastomer-Dichtelemente verbessert werden. Alternativ können auch Dichtmassen oder Kleber verwendet werden.

Die Herstellung der Druckübertragungsleitung 22 kann dabei im Falle, dass die Vorsatzplatte bzw. die Drosselblende aus einem Kunststoffmaterial besteht, durch eine Formgebung mit einem Spritzgießwerkzeug erfolgen. Alternativ kann eine Formgebung durch ein Druckgießwerkzeug erfolgen, falls die Vorsatzplatte und/oder die Drosselblende aus einem geeigneten Metall hergestellt wird/werden. Eine Nachbearbeitung mag nicht notwendig sein, kann aber zur Optimierung der Funktion erfolgen. Alternativ ist eine spanende Bearbeitung oder ein Prägen bei Metallteilen denkbar.

Eine erfindungsgemäße Drosselblende 20 bzw. deren Druckübertragungsleitung(en) 22 lassen sich insbesondere in einem bzw. dem gleichen Herstellungsschritt wie das Element selbst erzeugen. Somit ist insbesondere kein Einbringen der Zulauföffnung in einem zweiten Herstellungsschritt, z.B. durch Bohren oder dergleichen, notwendig. Die Herstellung der erfindungsgemäßen Drosselblende bzw. Vorsatzplatte ist somit wesentlich einfacher und kostengünstiger produzierbar.

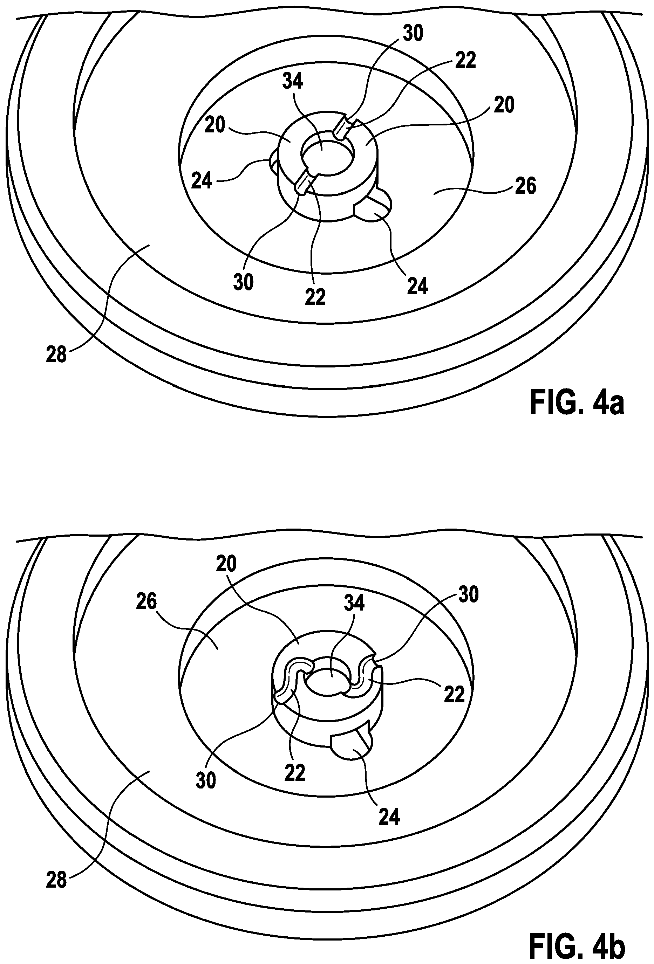

Weiter Bezug nehmend auf Figuren 4a,b werden exemplarische Ausgestaltungen der Drosselblende und der Druckübertragungsleitung gemäß der vorliegenden Erfindung dargestellt.

Geometrische Ausführungsformen der Druckübertragungsleitung 22 sind dabei zum Beispiel zwei gegenüberliegende wirksame Blendenöffnungen, wie in Figur 2 dargestellt. Alternativ kann nur eine Blendenöffnung bereitgestellt sein, während die zweite Seite der Druckübertragungsleitung 22 verschlossen ist. Alternativ lassen sich mehrere Blendenöffnungen, insbesondere mehr als zwei wirksame Blendenöffnungen 30 bereitstellen, welche beispielsweise durch eine sternförmige Nutführung der Druckübertragungsleitung 22 zur Messöffnung des Sensorelementes hin ausgebildet sind.

In Figur 4a,b dargestellt, weisen die Drosselblenden mittig im Bereich der Zulauföffnung bzw. Messöffnung zum Drucksensor ein größeres Volumen 34 auf, zum Beispiel ein Sackloch. Hierdurch mag sich eine Zentrierung der Blendengeometrie der Drosselblende 20 unter die Messöffnung des Sensorelementes 2 einfacher realisieren, da dadurch eine geforderte Genauigkeit reduziert werden mag. Durch die Verwendung eines größeren Volumens 34 mag auch die Energie eines Druckimpulses besser aufgenommen werden. Die Druckübertragungsleitungen der Figur 4a sind dabei exemplarisch als kurze lineare Abschnitte ausgebildet.

Alternativ können die Druckübertragungsleitungen 22, wie in Figur 4b dargestellt, auch nichtlinear verlaufen, beispielsweise gekrümmt, kurvig oder mäanderförmig. Sie verlaufen somit nicht direkt zum Anschlusspunkt des Drucksensors, sondern sind ein- bzw. mehrfach abgeknickt bzw. gekurvt, um die Energie eines Druckpulses besser abbauen zu können.

## Patentansprüche

1. Sensoranordnung, aufweisend:
eine Drosselblende (20) mit einer Zulauföffnung (30) für ein Übertragungsmedium;
und ein Sensorelement (2);
wobei die Zulauföffnung (30) eingerichtet ist, Druckspitzen bzw.
Druckschwankungen in einem Hydrauliksystem (10) zu dem Sensorelement (2) hin zu dämpfen,
wobei die Zulauföffnung (30) zumindest eine zwischen dem Hydrauliksystem (10) und einem Zulauf zum Sensorelement (2) verlaufende halbkreisförmige Nut ausbildet,
**dadurch gekennzeichnet, dass** die Sensoranordnung eine Vorsatzplatte (28) aufweist, wobei die Vorsatzplatte (28) zwischen Hydrauliksystem (10) und
der Drosselblende (20) zumindest eine zweite Zulauföffnung (24) und ein Volumen (26) bereitstellt, das Druckspitzen bzw. Druckschwankungen in dem Hydrauliksystem zu dem Sensorelement hin im Vergleich zur Drosselblende verringert dämpft, wobei die zumindest eine zweite Zulauföffnung (24) an das Hydrauliksystem (10) angekoppelt ist und das Volumen (26) zwischen der zumindest einen zweiten Zulauföffnung (24) und
der Zulauföffnung (30) angeordnet ist und wobei die halbkreisförmige Nut mit einer Oberfläche des Sensorelements (2) eine geschlossene Druckübertragungsleitung (22) mit einer Einlass- und einer Auslassöffnung ausbildet, so dass sich ein Druck vom Hydrauliksystem zum Sensorelement weitergeben lässt, und dass die Vorsatzplatte (28) und die Drosselblende (20) einstückig ausgeführt sind.

2. Sensoranordnung gemäß Anspruch 1,
wobei die Drosselblende (20) mittels eines Spritzgussverfahrens, eines Gießgussverfahrens, einer spanenden Bearbeitung oder eines Prägevorganges hergestellt ist.

## Claims

1. Sensor arrangement, having:
a throttle orifice (20) with an inflow opening (30) for a transmission medium;
and a sensor element (2);
wherein the inflow opening (30) is designed to dampen pressure peaks or pressure fluctuations in a hydraulic system (10) in the direction of the sensor element (2),
wherein the inflow opening (30) forms at least one semicircular groove which runs between the hydraulic system (10) and an inflow to the sensor element (2), **characterized in that** the sensor arrangement has an attachment plate (28), wherein the attachment plate (28) provides, between the hydraulic system (10) and the throttle orifice (20), at least one second inflow opening (24) and a volume (26) which dampens pressure peaks or pressure fluctuations in the hydraulic system in the direction of the sensor element to a reduced extent in relation to the throttle orifice, wherein the at least one second inflow opening (24) is coupled to the hydraulic system (10), and the volume (26) is arranged between the at least one second inflow opening (24) and the inflow opening (30), and wherein the semicircular groove, together with a surface of the sensor element (2), forms a closed pressure transmission line (22) with an inlet and an outlet opening, such that a pressure can be transmitted from the hydraulic system to the sensor element, and **in that** the attachment plate (28) and the throttle orifice (20) are of unipartite form.

2. Sensor arrangement according to Claim 1, wherein the throttle orifice (20) is produced by means of an injection moulding process, a casting process, a cutting machining process or a stamping process.

## Revendications

1. Agencement de capteur, présentant :
un diaphragme d'étranglement (20) avec une ouverture d'alimentation (30) pour un fluide de transfert ;
et un élément de capteur (2) ;
l'ouverture d'alimentation (30) étant prévue pour amortir des pointes de pression ou des variations de pression dans un système hydraulique (10) vers l'élément de capteur (2),
l'ouverture d'alimentation (30) constituant au moins une rainure de forme semi-circulaire s'étendant entre le système hydraulique (10) et une alimentation à l'élément de capteur (2),
**caractérisé en ce que** l'agencement de capteur présente une plaque d'habillage (28), la plaque d'habillage (28) produisant, entre le système hydraulique (10) et le diaphragme d'étranglement (20), au moins une deuxième ouverture d'alimentation (24) et un volume (26), qui amortit de manière réduite par rapport au diaphragme d'étranglement des pointes de pression ou des variations de pression dans le système hydraulique vers l'élément de capteur, l'au moins une deuxième ouverture d'alimentation (24) étant accouplée au système hydraulique (10) et le volume (26) étant disposé entre l'au moins une deuxième ouverture d'alimentation (24) et l'ouverture d'alimentation (30) et la rainure de forme semi-circulaire constituant avec une surface de l'élément de capteur (2) une conduite de transfert de pression fermée (22) avec une ouverture d'entrée et une ouverture de sortie, de telle sorte qu'une pression puisse être transmise du système hydraulique à l'élément de capteur, et **en ce que** la plaque d'habillage (28) et le diaphragme d'étranglement (20) sont réalisés d'une seule pièce.

2. Agencement de capteur selon la revendication 1, dans lequel le diaphragme d'étranglement (20) est fabriqué au moyen d'un procédé de moulage par injection, d'un procédé de coulée, d'un usinage par enlèvement de copeaux ou d'une opération d'estampage.
